(19) Europäisches Patentamt
European Patent Office
Office européen des brevets

(11) **EP 4 614 968 A1**

(12) **EUROPEAN PATENT APPLICATION**

(43) Date of publication:
**10.09.2025 Bulletin 2025/37**

(21) Application number: **24305351.9**

(22) Date of filing: **07.03.2024**

(51) International Patent Classification (IPC):
*H04N 19/105* (2014.01)   *H04N 19/11* (2014.01)
*H04N 19/136* (2014.01)   *H04N 19/176* (2014.01)
*H04N 19/593* (2014.01)

(52) Cooperative Patent Classification (CPC):
**H04N 19/11; H04N 19/105; H04N 19/136;**
**H04N 19/176; H04N 19/593**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **MARZUKI, Ismail**
**MONTREAL, H3J 1V4 (CA)**
• **PURI, Saurabh**
**SAINT-LAZARE, J7T 0P6 (CA)**
• **NASER, Karam**
**35250 MOUAZE (FR)**
• **BONNINEAU, Charles**
**MONTREAL, H2J 1G1 (CA)**

(74) Representative: **Interdigital**
**Immeuble ZEN 2**
**845 A, avenue des Champs Blancs**
**35510 Cesson-Sévigné (FR)**

(54) **DECODER SIDE INTRA MODE DERIVATION MERGE BASED ON COLLOCATED BLOCK**

(57) A method for encoding a current block comprising:

obtaining (80 the current block;

obtaining (1101) an histogram of gradients from at least each available spatially neighboring block of the current block regardless of the mode used to encode this spatially neighboring block, each obtaining of an histogram of gradients for a spatially neighboring block comprising computing the histogram of gradients responsive to no histogram of gradients had been already computed for the neighboring block;

determining (1102) a merged histogram of gradients from each obtained histogram of gradients;

selecting (83) at least one direction with highest cumulative magnitude in the first merged histogram of gradients to obtain at least one Decoder Side Intra Mode Derivation (DIMD) modes;

determining (84) a weight for each DIMD mode obtained from the selecting of at least one direction, each weight depending on relative magnitudes in the first merged histogram of gradients; and,

computing (85) a weighted sum of predictors obtained from the at least one DIMD mode and for a planar mode using each determined weights to obtain a final predictor for the current block.

Fig. 11

**Description**

**1. TECHNICAL FIELD**

At least one of the present embodiments generally relates to a method and a device for applying intra prediction in a picture.

**2. BACKGROUND**

To achieve high compression efficiency, video coding schemes usually employ predictions and transforms to leverage spatial and temporal redundancies in a video content. During an encoding, pictures of the video content are divided into blocks of samples (i.e., pixels), these blocks being then partitioned into one or more sub-blocks, called original sub-blocks in the following. An intra or inter prediction is then applied to each sub-block to exploit intra or inter image correlations. Whatever the prediction method used (intra or inter), a predictor sub-block is determined for each original sub-block. Then, a sub-block representing a difference between the original sub-block and the predictor sub-block, often denoted as a prediction error sub-block, or a prediction residual sub-block, or simply a residual sub-block, is transformed, quantized, and entropy coded to generate an encoded video stream. To reconstruct the video, the compressed data is decoded by inverse processes corresponding to the transform, quantization, and entropic coding.

A goal of intra prediction is to exploit the spatial correlations among neighboring pixels in a picture. Several intra prediction modes have been specified that aim to capture directionalities of object orientations and the slow changing intensity regions. In recent video compression standards, the intra prediction includes a plurality of intra prediction modes which consist of one DC, one PLANAR, and several angular prediction modes. The angular modes are designed to model directional structures of objects whereas the DC and the planar modes provide predictions for regions with slow and gradual intensity change. New intra prediction modes were recently proposed (see for example section 3.1.5 of document JVET-AF2025: Algorithm description of Enhanced Compression Model 11 (ECM 11) / Joint Video Experts Team (JVET) of ITU-T SG 16 WP 3 and ISO/IEC JTC 11SC 29, 32nd Meeting, Hannover, DE, 13-20 October 2023 just called *JVET-AF2025* in the following. One example is Decoder Side Intra Mode Derivation (DIMD). When DIMD is applied, up to five intra modes are derived from the reconstructed neighbor samples, and those five predictors are combined with the planar mode predictor with weights derived from an histogram of gradients (HoG) to create a final predictor. DIMD was complemented by DIMD merge. When using DIMD Merge, the DIMD information extracted from neighbouring blocks is used to compute the intra prediction for a current block. In particular, a new Merged Histogram of Gradients (MHoG) is computed for a current block based on the HoGs of neighbouring blocks. Current implementations of DIMD and DIMD merge have some limitations which may limit the performances of DIMD. For example, DIMD merge considers only spatial information and DIMD Merge in intra-frame is applied only when the current block has neighbouring blocks encoded with DIMD or DIMD Merge.

It is desirable to propose solutions allowing to overcome the above issues. In particular, it is desirable to improve the performances of DIMD.

**3. BRIEF SUMMARY**

In a first aspect, one or more of the present embodiments provide a method for encoding a current block of a current picture comprising:

> obtaining the current block;
> obtaining an histogram of gradients from at least each available spatially neighboring block of the current block regardless of the mode used to encode this spatially neighboring block, each obtaining of an histogram of gradients for a spatially neighboring block comprising computing the histogram of gradients responsive to no histogram of gradients had been already computed for the neighboring block;
> determining a first merged histogram of gradients from each obtained histogram of gradients resulting from the obtaining;
> selecting at least one direction with highest cumulative magnitude in the first merged histogram of gradients to obtain at least one first Decoder Side Intra Mode Derivation (DIMD) modes;
> determining a weight for each first DIMD mode obtained from the selecting of at least one direction, each weight depending on relative magnitudes in the first merged histogram of gradients; and,
> computing a weighted sum of predictors obtained from the at least one first DIMD mode and for a planar mode using each determined weights to obtain a final predictor for the current block.

In a second aspect, one or more of the present embodiments provide method for decoding a current block of a current picture comprising:

> obtaining the current block;
> obtaining an histogram of gradients from at least each available spatially neighboring block of the current block regardless of the mode used to encode this spatially neighboring block, each obtaining of an histogram of gradients for a spatially neighboring block comprising computing the histogram of gradients responsive to no histogram of gradients had been already computed for the neighboring block;
> determining a first merged histogram of gradients from each obtained histogram of gradients resulting from the obtaining;
> selecting at least one direction with highest cumulative magnitude in the first merged histogram of gradients to obtain at least one first Decoder Side Intra Mode Derivation (DIMD) modes;

determining a weight for each first DIMD mode obtained from the selecting of at least one direction, each weight depending on relative magnitudes in the first merged histogram of gradients; and,

computing a weighted sum of predictors obtained from the at least one first DIMD mode and for a planar mode using each determined weights to obtain a final predictor for the current block.

According to an embodiment of the first or the second aspect, responsive to a single histogram of gradients is obtained, the determining of the first merged histogram of gradients comprises forming the first merged histogram of gradients from the single histogram of gradients and responsive to a plurality of histograms of gradients is obtained, the determining of the first merged histogram of gradients comprises combining the histograms of gradients of the plurality by means of bins amplitude averaging.

According to an embodiment of the first or the second aspect, the obtaining of an histogram of gradients from at least each available spatially neighboring block of the current block regardless of the mode used to encode this spatially neighboring block comprises, obtaining at least one collocated block of the current block and obtaining an additional histogram of gradients for each collocated block, each additional histogram of gradients being used for determining the first merged histogram of gradients.

According to an embodiment of the first or the second aspect, the obtaining of an histogram of gradients from at least each available spatially neighboring block of the current block regardless of the mode used to encode this spatially neighboring block comprises, obtaining at least one block neighboring at least one collocated block of the current block and obtaining a complementary histogram of gradients for each neighboring block of a collocated block, each complementary histogram of gradients being used for determining the first merged histogram of gradients.

According to an embodiment of the first or the second aspect, the method further comprises:

obtaining at least one collocated block of the current block;
and for each collocated block:

obtaining an histogram of gradients from the collocated block;
determining a second merged histogram of gradients from the histogram of gradients obtained from the collocated block;
selecting at least one direction with highest cumulative magnitude in the second merged histogram of gradients to obtain at least one second Decoder Side Intra Mode Derivation (DIMD) modes;
determining a weight for each second DIMD mode; and
wherein the computing of the weighted sum of predictors considers in addition each predictor obtained from a second DIMD mode and each weight associated to each second DIMD mode.

According to an embodiment of the first or the second aspect, the method further comprises:

obtaining at least one block neighboring at least one collocated block of the current block;
and for each collocated block:

obtaining at least one histogram of gradients from the at least one block neighboring the collocated block;
determining a complementary merged histogram of gradients from each histogram of gradients obtained from the at least one block neighboring the collocated block;
selecting at least one direction with highest cumulative magnitude in the complementary merged histogram of gradients to obtain at least one complementary Decoder Side Intra Mode Derivation (DIMD) modes;
determining a weight for each complementary DIMD mode; and
wherein the computing of the weighted sum of predictors considers in addition each predictor obtained from a complementary DIMD mode and each weight associated to each complementary DIMD mode.

In a third aspect, one or more of the present embodiments provide a device for encoding a current block of a current picture comprising electronic circuitry configured for:

obtaining the current block;
obtaining an histogram of gradients from at least each available spatially neighboring block of the current block regardless of the mode used to encode this spatially neighboring block, each obtaining of an histogram of gradients for a spatially neighboring block comprising computing the histogram of gradients responsive to no histogram of gradients had been already computed for the neighboring block;
determining a first merged histogram of gradients from each obtained histogram of gradients resulting from the obtaining;
selecting at least one direction with highest cumulative magnitude in the first merged histogram of gradients to obtain at least one first Decoder Side Intra Mode Derivation (DIMD) modes;
determining a weight for each first DIMD mode obtained from the selecting of at least one direction, each weight depending on relative magnitudes in the first merged histogram of gradients; and, computing a weighted sum of predictors obtained from the at least one first DIMD mode and for a planar mode using each determined weights to obtain a final predictor for the current block.

In a fourth aspect, one or more of the present embodiments provide a device for decoding a current block of a current picture comprising electronic circuitry configured for:

obtaining the current block;
obtaining an histogram of gradients from at least each available spatially neighboring block of the current block regardless of the mode used to encode this spatially neighboring block, each obtaining of an histogram of gradients for a spatially neighboring block comprising computing the histogram of gradients responsive to no histogram of gradients had been already computed for the neighboring block;
determining a first merged histogram of gradients from each obtained histogram of gradients resulting from the obtaining;
selecting at least one direction with highest cumulative magnitude in the first merged histogram of gradients to obtain at least one first Decoder Side Intra Mode Derivation (DIMD) modes;
determining a weight for each first DIMD mode obtained from the selecting of at least one direction, each weight depending on relative magnitudes in the first merged histogram of gradients; and, computing a weighted sum of predictors obtained from the at least one first DIMD mode and for a planar mode using each determined weights to obtain a final predictor for the current block.

In an embodiment of the third or the fourth aspect, responsive to a single histogram of gradients is obtained, the determining of the first merged histogram of gradients comprises forming the first merged histogram of gradients from the single histogram of gradients and responsive to a plurality of histograms of gradients is obtained, the determining of the first merged histogram of gradients comprises combining the histograms of gradients of the plurality by means of bins amplitude averaging.

In an embodiment of the third or the fourth aspect, the obtaining of an histogram of gradients from at least each available spatially neighboring block of the current block regardless of the mode used to encode this spatially neighboring block comprises, obtaining at least one collocated block of the current block and obtaining an additional histogram of gradients for each collocated block, each additional histogram of gradients being used for determining the first merged histogram of gradients.

In an embodiment of the third or the fourth aspect, the obtaining of an histogram of gradients from at least each available spatially neighboring block of the current block regardless of the mode used to encode this spatially neighboring block comprises, obtaining at least one block neighboring at least one collocated block of the current block and obtaining a complementary histogram of gradients for each neighboring block of a collocated block, each complementary histogram of gradients being used for determining the first merged histogram of gradients.

In an embodiment of the third or the fourth aspect, the electronic circuitry is further configured for:

obtaining a collocated block of the current block; and for each collocated block:

obtaining an histogram of gradients from the collocated block;
determining a second merged histogram of gradients from the histogram of gradients obtained from the collocated block;
selecting at least one direction with highest cumulative magnitude in the second merged histogram of gradients to obtain at least one second Decoder Side Intra Mode Derivation (DIMD) modes;
determining a weight for each second DIMD mode; and
wherein the computing of the weighted sum of predictors considers in addition each predictor obtained from a second DIMD mode and each weight associated to each second DIMD mode.

In an embodiment of the third or the fourth aspect, the electronic circuitry is further configured for:

obtaining at least one block neighboring at least one collocated block of the current block; and for each collocated block:

obtaining at least one histogram of gradients from the at least one block neighboring the collocated block;
determining a complementary merged histogram of gradients from each histogram of gradients obtained from the at least one block neighboring the collocated block;
selecting at least one direction with highest cumulative magnitude in the complementary merged histogram of gradients to obtain at least one complementary Decoder Side Intra Mode Derivation (DIMD) modes;
determining a weight for each complementary DIMD mode; and
wherein the computing of the weighted sum of predictors considers in addition each predictor obtained from a complementary DIMD mode and each weight associated to each complementary DIMD mode.

In a fifth aspect, one or more of the present embodiments provide Non-transitory information storage medium storing program code instructions for implementing the method according to the first or the second aspect.

In a sixth aspect, one or more of the present embodiments provide a computer program comprising program code instructions for implementing the method according to the first or the second aspect.

In a seventh aspect, one or more of the present embodiments provide a signal generated by the method for encoding according to the first aspect or by the device for encoding according to the third aspect.

## 4. BRIEF SUMMARY OF THE DRAWINGS

Fig. 1 illustrates schematically a context in which embodiments are implemented;

Fig. 2 illustrates schematically an example of partitioning undergone by a picture of pixels of an original video;

Fig. 3 depicts schematically a method for encoding a video stream;

Fig. 4 depicts schematically a method for decoding an encoded video stream;

Fig. 5A illustrates schematically an example of hardware architecture of a processing module able to implement an encoding module or a decoding module in which various aspects and embodiments are implemented;

Fig. 5B illustrates a block diagram of an example of a first system in which various aspects and embodiments are implemented;

Fig. 5C illustrates a block diagram of an example of a second system in which various aspects and embodiments are implemented;

Fig. 6 illustrates schematically reference samples for intra prediction when a CU is square (left) or rectangular (right);

Fig. 7 represents a derivation of an Histogram of Oriented Gradients (HoG) from samples neighboring a current block;

Fig. 8 represents a process to derive a DIMD predictor;

Fig. 9 illustrates reference regions used in two variants of the DIMD mode;

Fig. 10 illustrates schematically the DIMD merge mode;

Fig. 11 illustrates an example of process compliant with a first embodiment;

Fig. 12 illustrates schematically an example of application of the first embodiment;

Fig. 13 illustrates schematically a determination of a Merged Histogram of Gradients (MHoGs) from collocated blocks;

Fig. 14 illustrates an example of process compliant with the second embodiment; and,

Fig. 15 illustrates schematically a variant of the process compliant with the second embodiment.

## 5. DETAILED DESCRIPTION

The following examples of embodiments are described in the context of a video format similar to ECM as described in document JVET-AF2025. However, these embodiments are not limited to the video coding/decoding method corresponding to ECM. These embodiments are, in particular, adapted to various video formats comprising (and derived from) for example VVC (Versatile Video Coding (VVC), ITU-T H.266), HEVC (ISO/IEC 23008-2 - MPEG-H Part 2, High Efficiency Video Coding / ITU-T H.265)), AVC ((ISO/CEI 14496-10), EVC (Essential Video Coding/MPEG-5), AV1, AV2 and VP9. In addition, these embodiments are also adapted to various still picture formats such as JPEG.

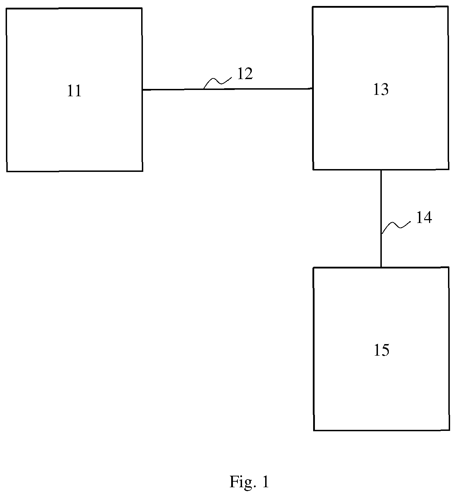

**Fig. 1** illustrates schematically a context in which embodiments are implemented.

In Fig. 1, a system 11, that could be a camera, a storage device, a computer, a server or any device capable of delivering a video stream (i.e., video data), transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or 5G) network link.

The system 13, that could be for example a set top box, receives and decodes the video stream to generate a sequence of decoded pictures. A post processing may be applied to the decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display system 15 are comprised in a TV, a computer, a tablet, a smartphone, a head-mounted display, etc.

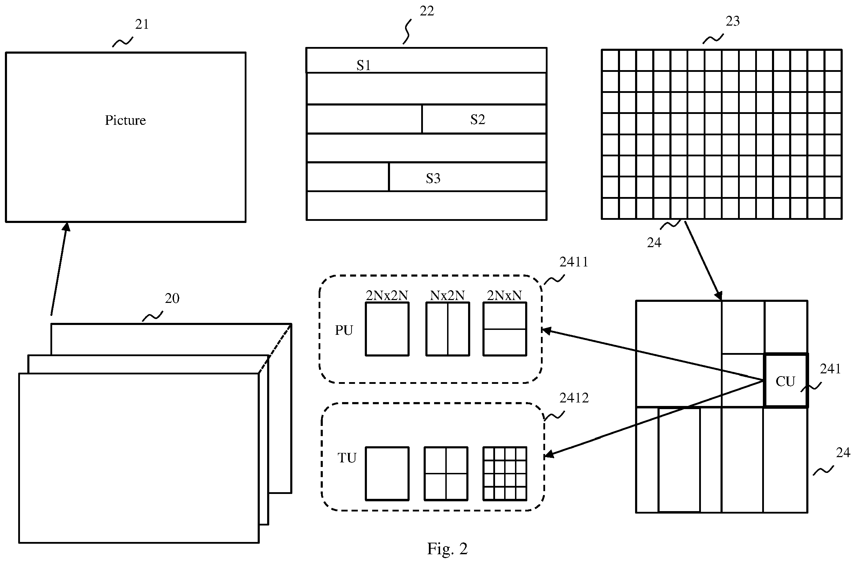

Figs. 2, 3 and 4 introduce an example of video format.

**Fig. 2** illustrates an example of partitioning undergone by a picture of pixels (or samples) 21 of an original video sequence 20. It is considered here that a pixel is composed of three components: a luminance component and two chrominance components. Other types of pixels are however possible comprising less or more components such as only a luminance component or an additional depth component or transparency component.

A picture is divided into a plurality of coding entities. First, as represented by reference 23 in Fig. 2, a picture is divided in a grid of blocks called *coding tree units* (CTU). A CTU consists of an $N \times N$ block of luminance samples together with two corresponding blocks of chrominance samples. $N$ is generally a power of two having a maximum value of "128" for example. Second, a picture is divided into one or more groups of CTU. For example, it can be divided into one or more tile rows and tile columns, a *tile* being a sequence of CTUs covering a rectangular region of a picture. In some cases, a tile could be divided into one or more *bricks,* each of which consisting of at least one row of CTUs within the tile. Above the concept of tiles and bricks, another encoding entity, called *slice,* exists, that can contain at least one tile of a picture or at least one brick of a tile.

In the example of Fig. 2, as represented by reference 22, the picture 21 is divided into three slices S1, S2 and S3 of the raster-scan slice mode, each comprising a plurality of tiles (not represented), each tile comprising only one brick.

As represented by reference 24 in Fig. 2, a CTU may be partitioned into the form of a hierarchical tree of one or more sub-blocks called *coding units* (CU). The CTU is the root (*i.e.* the parent node) of the hierarchical tree and can be partitioned in a plurality of CUs (*i.e.* child nodes). Each CU becomes a leaf of the hierarchical tree if it is not further partitioned in smaller CUs, or becomes a parent node of smaller CUs (*i.e.* child nodes) if it is further partitioned.

In the example of Fig. 2, the CTU 24 is first partitioned in "4" square CUs using a quadtree type partitioning. The upper left CU is a leaf of the hierarchical tree since it is not further partitioned, *i.e.,* it is not a parent node of any other CU. The upper right CU is further partitioned in "4" smaller square CUs using again a quadtree type partitioning. The bottom right CU is vertically partitioned in "2" rectangular CUs using a binary tree type partitioning. The bottom left CU is vertically partitioned in "3" rectangular CUs using a ternary tree type partitioning.

During the coding of a picture, the partitioning is adaptive, each CTU being partitioned so as to optimize a compression efficiency of the CTU criterion.

In HEVC the concept of prediction unit (PU) and transform unit (TU) were also introduced. Indeed, in HEVC, the coding entities that are used for prediction (*i.e.,* a PU) and transform (*i.e.* a TU) can be different subdivisions of a CU. For example, as represented in Fig. 2, a CU of size $2N \times 2N$, can be divided in PUs 2411 of size $N \times 2N$ or of size $2N \times N$. In addition, said CU can be divided in "4" TUs 2412 of size $N \times N$ or in "16" TUs of size

$$\left(\frac{N}{2}\right) \times \left(\frac{N}{2}\right).$$ The TUs are always of square shapes.

One can note that in VVC and ECM, except in some particular cases, boundaries of the TU and PU are aligned on those of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

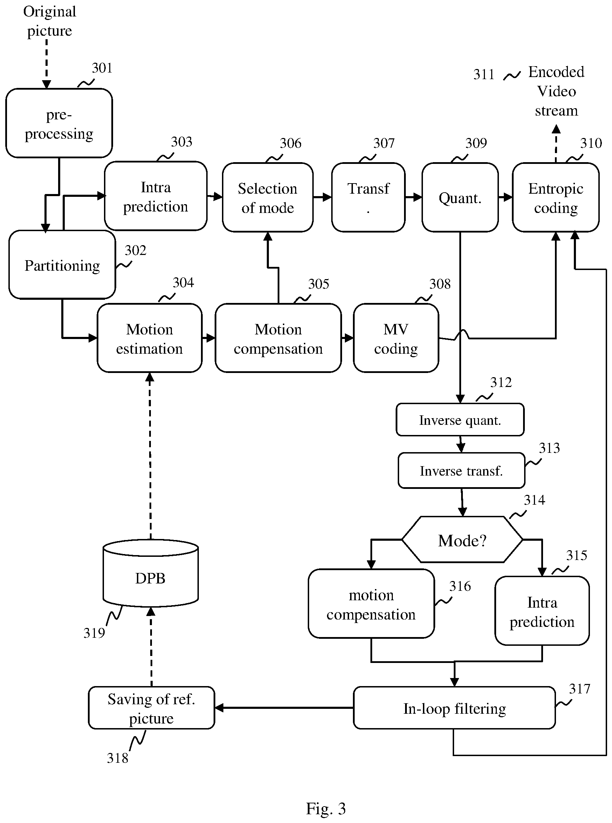

**Fig. 3** depicts schematically a method for encoding a video stream executed by an encoding module. For instance, the method for encoding of Fig. 3 is executed by the system 11. Variations of this method for encoding are contemplated, but the method for encoding of Fig. 3 is described below for purposes of clarity without describing all expected variations.

Before being encoded, a current original picture of an original video sequence may go through a preprocessing. For example, in a step 301, a color transform is applied to the current original picture (e.g., conversion from RGB 4:4:4 to YCbCr 4:2:0), or a remapping is applied to the current original picture components in order to get a signal distribution more resilient to compression (for instance using a histogram equalization of one of the color components). Pictures obtained by preprocessing are called pre-processed pictures in the following.

The encoding of a pre-processed picture begins with a partitioning of the pre-processed picture during a step 302, as described in relation to Fig. 2. The preprocessed picture is thus partitioned into CTU, CU, PU, TU, etc.

For each block, the encoding module determines then a coding mode between an intra prediction mode and an inter prediction mode.

Intra prediction aims at exploiting spatial redundancies in a picture. In a step 303, a current block (i.e. a PU or CU) is spatially predicted from samples of causal neighbour blocks in the same picture, i.e., the blocks on the top and top-right, the blocks on the left and left-bottom, and the top-left block. The encoder constructs a plurality of predictor blocks for the current block from these samples and chooses the one that leads to the best rate-distortion (RD) performance. In recent video compression methods, up to "67" intra prediction modes leading to "67" predictor blocks are constructed. The plurality of predictor blocks comprises a planar mode (indexed as mode 0), a DC mode (indexed as mode "1") and the remaining "65" are angular modes. The planar and DC modes aim to model slow changing intensity regions whereas the angular modes are designed to model directional structures present in pictures. The best prediction mode is encoded and transmitted to the decoder so that the decoder constructs the same intra predictor block for the current block. Further improvements to intra prediction has been proposed recently that aim at improving the intra prediction accuracy through decoder side intra mode derivation (DIMD) and fusion for template-based intra mode derivation (TIMD).

To keep the decoder complexity low, the intra prediction uses generally only one row of reference pixels on top and one column of reference pixels on left of the current block. Though the encoder has the option of choosing among three sets of reference lines in a mode called *multiple reference lines* (MRL), the prediction is always based on one reference line that consists of one row on top and one column on left. Because of this limitation, the amount of information contained in the reference pixels is quite limited and thus the intra prediction efficiency, which is based on the correlation between the current block's pixels and the reference pixels, is also limited. More recently, a proposal for using up to two adjacent reference lines has been adopted. In this case, the predictor is constructed as a weighted average of the two predictors each based on a single reference line.

In an example, intra prediction can be represented with a process comprising three steps: reference sample generation; intra sample prediction; and post-processing of predicted samples.

Reference sample generation:

For a current CU of size $M \times N$, a top reference array consists of ($2N$+1) decoded samples from the decoded top CU and top-right CU. Similarly, a left reference array consists of ($2M$+1) samples from the decoded CUs on the left and below-left. If some of the samples on top or left are not available, because of the corresponding CUs not being in the same slice, or the current CU being at a frame boundary, etc., then a method called reference sample substitution is performed, where the missing samples are copied from the available samples in a clock-wise direction. Then, depending on the current CU size and the prediction mode, the reference samples are filtered using the [1/4, 1/2, 1/4] filter.

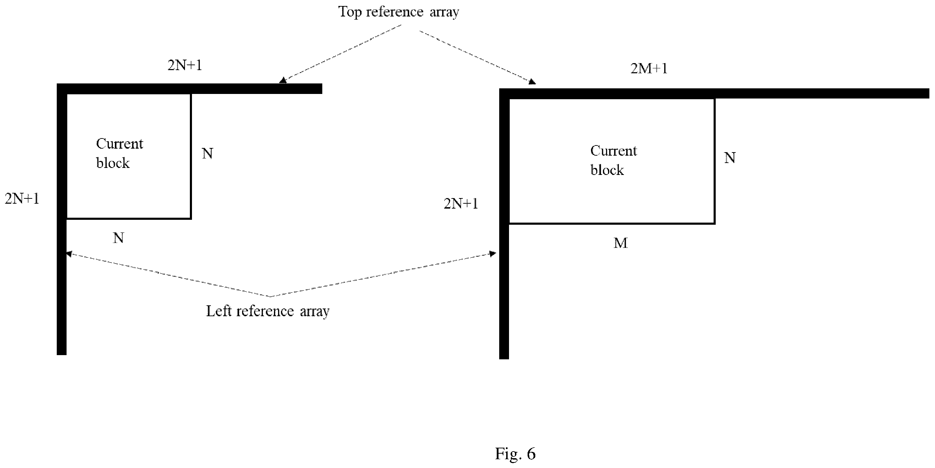

**Fig. 6** illustrates schematically reference samples for intra prediction when the CU is square (left) or rectangular (right).

Intra sample prediction:

In the intra sample prediction step, the encoder checks for the best prediction mode among the "67" prediction modes. As already mentioned, the PLANAR and DC prediction modes are used to predict smooth and gradually changing regions, whereas angular prediction modes are used to capture different directional structures. The directional prediction modes define predictions along, for example, "65" directions in the range from "45" degrees to "-135" degrees in clock-wise fashion. In the DC prediction mode, either the average value of the reference samples on top and left, or the average value of the reference samples on the longer side of the block, is used as a prediction for the entire block. In the planar prediction mode, the predicted values are computed as the average of a horizontal interpolation and a vertical interpolation; the former is a linear interpolation between the left reference samples and the top-right reference sample whereas the latter is another linear interpolation between the top reference samples and the bottom-left reference sample. In the directional modes, the prediction is obtained by copying the reference samples along the associated directions. Depending on the current block size and the prediction direction, the reference samples may be filtered for a Gaussian or a cubic interpolation.

Post-processing of predicted samples:

In the post-processing step, the predicted values may be smoothed in order to avoid discontinuities for certain prediction modes, such as the PLANAR mode, the DC mode, the purely vertical and purely horizontal modes, and the modes with directions from bottom-left towards top-right or vice versa. The smoothing is performed with a technique called *position dependent intra prediction combination* (PDPC).

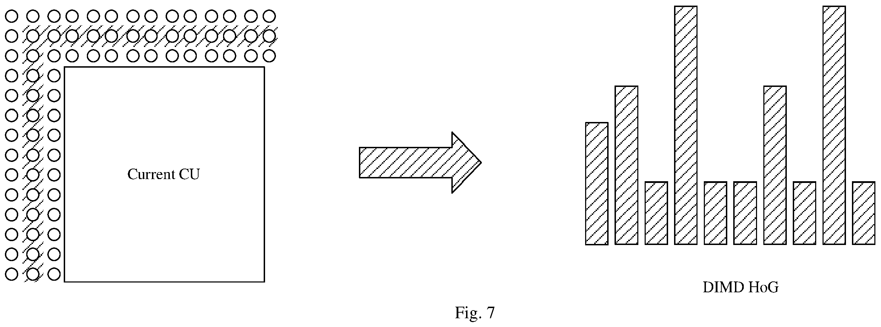

Decoder side Intra Mode Derivation (DIMD) is a new tool to derive an intra prediction mode for coding a current block. DIMD relies on an assumption that reconstructed samples surrounding the current block to be predicted carries information to infer a texture directionality in this current block. When DIMD is applied, up to five intra prediction modes among the "65" directional modes, that are likely the best intra prediction modes for predicting the current block, are derived from a Histogram of Oriented Gradients (HoG) computed from the neighbouring samples of the current block. The HoG is computed on a three-samples wide/high L-shaped template formed of already reconstructed samples as represented in **Fig. 7.** The predictions with these up to five intra prediction modes are combined with a planar mode predictor with weights derived from the HoG.

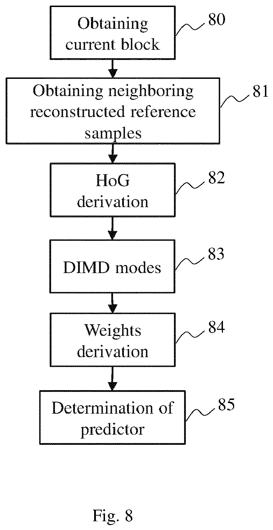

**Fig. 8** represents a process to derive a DIMD predictor.

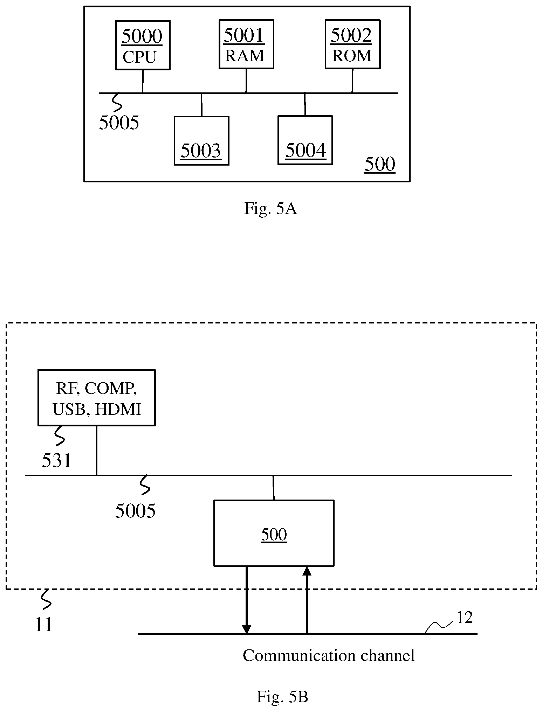

The process of Fig. 8 is applied by a processing module that may be the processing module 500 of Fig. 5A described later.

In a step 80, the processing module obtains a current block.

In a step 81, the processing module obtains a three-samples wide/high L-shaped template formed of already reconstructed samples neighbouring the current block. One can note that the shape of the template may be adaptive depending on samples availability.

In a step 82, the processing module derives the Histogram of Oriented Gradients (HoG) from the samples of the template. The HoG is obtained using a Sobel filter, accumulating the magnitudes of all gradients at a given direction, for all the samples within the dashed region in Fig. 7.

In a step 83, the processing module selects up to five directions with highest cumulative magnitude in the HoG to obtain DIMD modes.

In a step 84, the processing module determines a weight for each of the selected DIMD mode. Each weight depends on the relative magnitudes of the DIMD modes in the HoG.

In a step 85, the processing module computes a weighted sum of the predictors obtained from each DIMD mode and for the planar mode using the determined weights to obtain a final predictor for the current block.

As the prediction modes are derived using the neighbouring decoded samples, but not the current block information, the decoder can derive the same up to five best prediction modes as the encoder and can compute the prediction as a weighted sum with the planar mode predictor. For each intra-coded block, a flag namely *cu_dimd_flag* indicating whether a DIMD mode is to be applied or not is signalled.

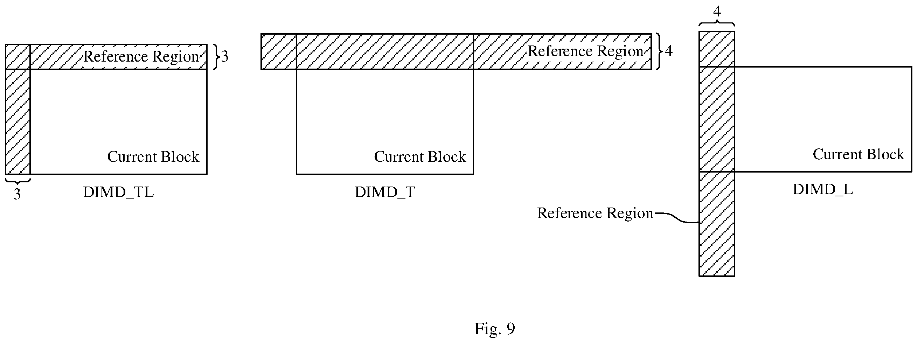

Several variants of the DIMD mode were proposed. For instance, two additional DIMD modes *DIMD_T* and *DIMD_L* allowing selecting different neighbouring samples were proposed. In the DIMD_T mode, top-left, top, and top-right neighbouring samples are used as reference region. In DIMD_L mode, top-left, left, and left-bottom neighbouring samples are used as reference region. The number of lines and columns of samples in the reference region in DIMD_T and DIMD_L modes is "4". The reference region used in these two modes are shown in **Fig. 9.** In each CU, a new flag named *cu_dimd_mode* is signalled after the DIMD enabled flag (*cu_dimd_flag*) to determine which DIMD mode is used.

Another variant is DIMD merge. When using DIMD Merge, the DIMD information extracted from neighboring blocks is used to compute the intra prediction for the current block. In particular, a new Merged Histogram of Gradients (MHoG) is computed for the current block based on the HoGs of neighbouring blocks.

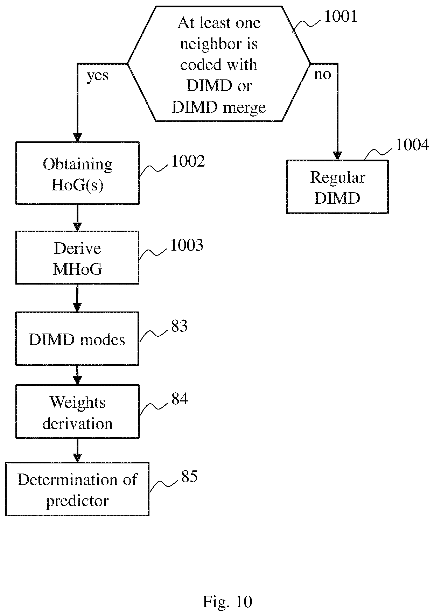

**Fig. 10** illustrates schematically the DIMD merge mode.

The process of Fig. 10 is applied by a processing module that may be the processing module 500 of Fig. 5A.

In a step 1001, the processing module obtains a current block determines if at least one neighboring block of the current block was encoded using DIMD or DIMD merge. If no, in a step 1004, the processing module applies the regular DIMD process as described above in relation to Fig. 8.

Otherwise, in a step 1002, the processing module obtains the HoG(s) from each spatially neighboring block encoded using the DIMD mode or the DIMD merge mode.

In a step 1003, if a single neighboring block was encoded using DIMD or DIMD Merge, then its HoG is used by the processing module to form the MHoG for the current block. If more than one neighboring block was encoded using DIMD or DIMD Merge, the corresponding HoGs are combined by the processing module by means of bins amplitude averaging to derive the MHoG.

Step 1003 is followed by steps 83, 84 and 85 already explained in relation to Fig. 8.

Usage of DIMD Merge is signalled with a block level flag. DIMD Merge is considered as a sub-mode of DIMD. That is, the DIMD Merge flag is only signalled if *cu_dimd_flag* = 1 and if there is at least one neighboring block encoded using DIMD or DIMD Merge.

In some implementations (see document J. Huo, J. Fan, Z. Zhang, Y. Ma, F. Yang, M. Li, "EE2-related: Non-adjacent spatial candidates for DIMD merge," document JVET-AF0106, October 2023), the DIMD merge mode was extended to include up to "31" surrounding blocks to derive the MHoG. In that case, non-adjacent spatial candidates blocks are considered to compute the DIMD mode for the current block. A new flag is introduced and is signaled just after the flag *cu_dimd_flag* if the latter is true.

As can be seen from the above, when intra prediction is enabled in inter pictures, current implementations of the DIMD Merge mode considers only spatial information. In intra pictures, DIMD merge is constructed only when the current block has neighboring blocks encoded with DIMD or DIMD Merge.

A recent document M. Blestel, P. Andrivon, "AHG12: DIMD Merge List," document JVET-AG0084, January 2024 (called JVET-AG0084 in the following) proposes to introduce a generation of a DIMD merge candidate list. The proposed DIMD merge candidate list is built by reusing the DIMD information and DIMD merge information from spatial adjacent and non-adjacent neighboring blocks. JVET-AG0084 reported that the DIMD process is unchanged, tested when at least one neighboring block uses the DIMD mode, and considered a sub-mode of DIMD with "2" additional flags to indicate the DIMD merge mode and the DIMD merge index. However, JVET-AG0084 is applied only for intra pictures taking only characteristics from spatially neighboring blocks of the current block.

The inter prediction consists in predicting the pixels of a current block from a block of pixels, referred to as the reference block, of a picture preceding or following the current picture, this picture being referred to as the reference picture. During the coding of a current block in accordance with the inter prediction method, a block of the reference picture closest, in accordance with a similarity criterion, to the current block is determined by a motion estimation step 304. During step 304, a motion vector indicating the position of the reference block in the reference picture is determined. Said motion vector is used during a motion compensation step 305 during which a residual block is calculated in the form of a difference between the current block and the reference block. In first video compression standards, the monodirectional inter prediction mode described above was the only inter mode available. As video compression standards evolve, the family of inter modes has grown significantly and comprises now many different inter modes.

During a selection step 306, the prediction mode optimising the compression performances, in accordance with a rate/distortion optimization criterion (i.e. RDO criterion), among the prediction modes tested (intra prediction modes, Inter prediction modes), is selected by the encoding module.

When the prediction mode is selected, the residual block is transformed during a step 307. The transformed block is then quantized during a step 309.

Note that the encoding module can skip the transform and apply quantization directly to the non-transformed residual signal. When the current block is coded according to an intra prediction mode, information indicating the selected intra prediction mode are encoded by an entropy encoder during a step 310. When the current block is encoded according to an inter prediction, when appropriate, a motion vector of the block is predicted from a prediction vector selected from a set of motion vector predictors derived from reconstructed blocks situated in a spatial and temporal vicinity of the block to be encoded. The motion information is next encoded by the entropy encoder during step 310 in the form of a motion residual and an index for identifying the prediction vector. The transformed and quantized residual block is encoded by the entropy encoder during step 310.

Note that the encoding module can bypass both transform and quantization, *i.e.,* the entropy encoding is applied on the residual without the application of the transform or quantization processes. The result of the entropy encoding is inserted in an encoded video stream (i.e. in video data) 311.

Metadata such as SEI (supplemental enhancement information) messages can be attached to the encoded video stream 311. A SEI message as defined for example in standards such as AVC, HEVC or VVC (or in standard Versatile supplemental enhancement information (VSEI) messages for coded video bitstreams - H.274) is a data container or a syntax structure associated to a video stream and comprising metadata providing information relative to the video stream.

After the quantization step 309, the current block is reconstructed so that the pixels corresponding to that block can be used for future predictions. This reconstruction phase is also referred to as a *prediction loop.* An inverse quantization is therefore applied to the transformed and quantized residual block during a step 312 and an inverse transformation is applied during a step 313. According to the prediction mode used for the block obtained during a step 314, the predictor block of the block is reconstructed. If the current block is encoded according to an inter prediction mode, the encoding module applies, when appropriate, during a step 316, a motion compensation using the motion vector of the current block in order to identify the reference block of the current block. If the current block is encoded according to an intra prediction mode, during a step 315, the intra prediction mode selected for the current block is used for reconstructing the predictor block of the current block. The predictor block and the reconstructed residual block are added in order to obtain the reconstructed current block.

Following the reconstruction, an in-loop filtering intended to reduce the encoding artefacts is applied, during a step 317, to the reconstructed block. This filtering is called *in-loop filtering* since this filtering occurs in the prediction loop to obtain at the decoder the same reference pictures as the encoder and thus avoid a drift between the encoding and the decoding processes. In-loop filtering tools comprises deblocking filtering, SAO (Sample adaptive Offset) and ALF (Adaptive Loop Filtering).

When a block is reconstructed, it is inserted during a step 318 into a reconstructed picture stored in a memory 319 of reconstructed pictures generally called Decoded Picture Buffer (DPB). The reconstructed pictures thus stored can then serve as reference pictures for other pictures to be coded.

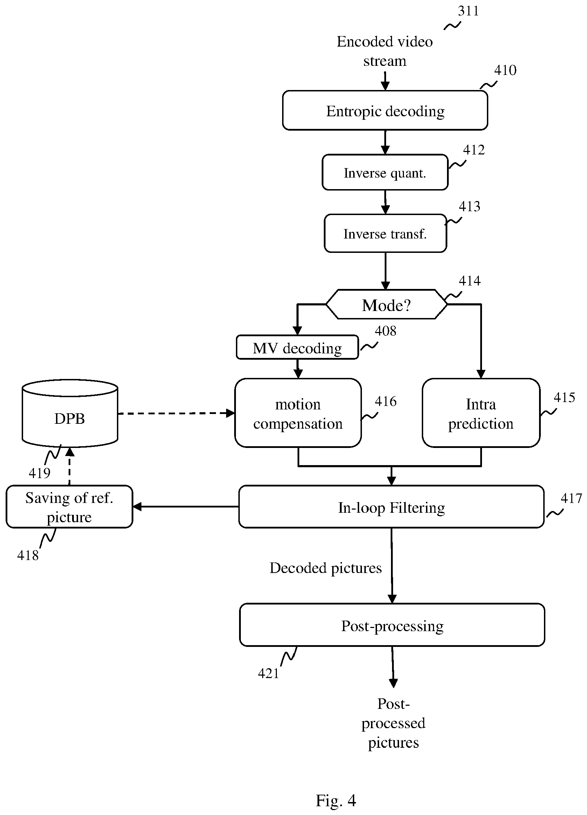

**Fig. 4** depicts schematically a method for decoding the encoded video stream (i.e. the video data) 311 encoded according to method described in relation to Fig. 3 executed by a decoding module. For instance, the method for decoding of Fig. 4 is executed by the system 13. Variations of this method for decoding are contemplated, but the method for decoding of Fig. 4 is described below for purposes of clarity without describing all expected variations.

The decoding is done block by block. For a current block, it starts with an entropic decoding of the current block during a step 410. Entropic decoding allows to obtain, at least, the prediction mode of the block.

If the block has been encoded according to an inter prediction mode, the entropy decoding allows to obtain, when appropriate, a motion vector predictor index, a motion residual and a prediction residual block. During a step 408, a motion vector is reconstructed for the current block using the prediction vector index and the motion residual.

If the block has been encoded according to an intra prediction mode, entropy decoding allows, when appropriate, to obtain a prediction mode and a prediction residual block. Steps 412, 413, 414, 415, 416 and 417 implemented by the decoding module are in all respects identical respectively to steps 312, 313, 314, 315, 316 and 317 implemented by the encoding module.

Decoded blocks are saved in decoded pictures and the decoded pictures are stored in a DPB 419 in a step 418. When the decoding module decodes a given picture, the pictures stored in the DPB 419 are identical to the pictures stored in the DPB 319 by the encoding module during the encoding of said given picture. The decoded picture can also be sent as output by the decoding module for instance to be displayed.

Following the in-loop filtering (i.e., following the generation of the decoded pictures), a post-processing step 421 may be applied.

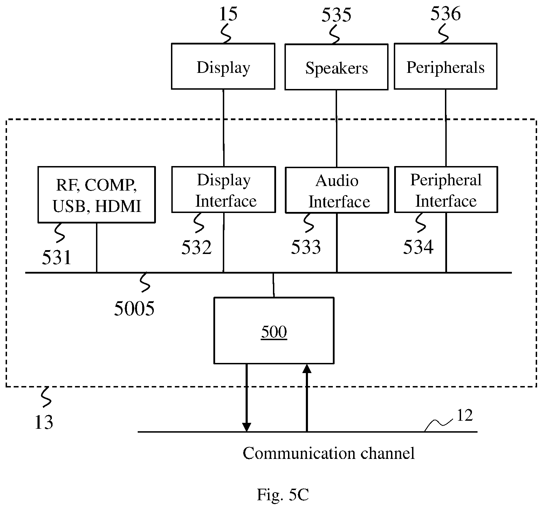

Fig. 5A, 5B and 5C describes examples of device, apparatus and/or system allowing implementing the various embodiments.

**Fig. 5A** illustrates schematically an example of hardware architecture of a processing module 500 able to implement an encoding module or a decoding module capable of implementing respectively a method for encoding of Fig. 3 and a method for decoding of Fig. 4 modified according to different aspects and embodiments. The encoding module is for example comprised in the system 11 when this system is in charge of encoding the video stream. The decoding module is for example comprised in the system 13.

The processing module 500 comprises, connected by a communication bus 5005: a processor or CPU (central processing unit) 5000 encompassing one or more microprocessors, general purpose computers, special purpose computers, and processors based on a multi-core architecture, as non-limiting examples; a random access memory (RAM) 5001; a read only memory (ROM) 5002; a storage unit 5003, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 5004 for exchanging data with other modules, devices or system. The communication interface 5004 can include, but is not limited to, a transceiver configured to transmit and to receive data over a communication channel. The communication interface 5004 can include, but is not limited to, a modem or network card.

If the processing module 500 implements a decoding module, the communication interface 5004 enables for instance the processing module 500 to receive encoded video streams and to provide a sequence of decoded pictures. If the processing module 500 implements an encoding module, the communication interface 5004 enables for instance the processing module 500 to receive a sequence of original picture data to encode and to provide an encoded video stream.

The processor 5000 is capable of executing instructions loaded into the RAM 5001 from the ROM 5002, from an external memory (not shown), from a storage medium, or from a communication network. When the processing module 500 is powered up, the processor 5000 is capable of reading instructions from the RAM 5001 and executing them. These instructions form a computer program causing, for example, the implementation by the processor 5000 of a decoding method as described in relation with Fig. 4 and/or an encoding method described in relation to Fig. 3, and methods illustrated in relation to Figs. 7 to 15, these methods comprising various aspects and embodiments described below in this document.

All or some of the algorithms and steps of the methods of Figs. 3, 4 and 7-15 may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit).

As can be seen, microprocessors, general purpose computers, special purpose computers, processors based or not on a multi-core architecture, DSP, microcontroller, FPGA and ASIC are electronic circuitry adapted or configured to implement at least partially the methods of Figs. 3, 4, 8-15.

**Fig. 5C** illustrates a block diagram of an example of the system 13 in which various aspects and embodiments are implemented. The system 13 can be embodied as a device including the various components described below and is configured to perform one or more of the aspects and embodiments described in this document. Examples of such devices include, but are not limited to, various electronic devices such as personal computers, laptop computers, smartphones, tablet computers, digital multimedia set top boxes, digital television receivers, personal video recording systems, connected home appliances and head mounted display. Elements of system 13, singly or in combination, can be embodied in a single integrated circuit (IC), multiple ICs, and/or discrete components. For example, in at least one embodiment, the system 13 comprises one processing module 500 that implements a decoding module. In various embodiments, the system 13 is communicatively coupled to one or more other systems, or other electronic devices, via, for example, a communications bus or through dedicated input and/or output ports. In various embodiments, the system 13 is configured to implement one or more of the aspects described in this document.

The input to the processing module 500 can be provided through various input modules as indicated in block 531. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 5C, include composite video.

In various embodiments, the input modules of block 531 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and band-limited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF module and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system 13 to other electronic devices across USB and/or HDMI connections. It is to be understood that various aspects of input processing, for example, Reed-Solomon error correction, can be implemented, for example, within a separate input processing IC or within the processing module 500 as necessary. Similarly, aspects of USB or HDMI interface processing can be implemented within separate interface ICs or within the processing module 500 as necessary. The demodulated, error corrected, and demultiplexed stream is provided to the processing module 500.

Various elements of system 13 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 13, the processing module 500 is interconnected to other elements of said system 13 by the bus 5005.

The communication interface 5004 of the processing module 500 allows the system 13 to communicate on the communication channel 12. As already mentioned above, the communication channel 12 can be implemented, for example, within a wired and/or a wireless medium.

Data is streamed, or otherwise provided, to the system 13, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 13 using the RF connection of the input block 531. As indicated above, various embodiments provide data in a non-streaming manner. Additionally, various embodiments use wireless networks other than Wi-Fi, for example a cellular network or a Bluetooth network.

The system 13 can provide an output signal to various output devices, including the display system 15, speakers 535, and other peripheral devices 536. The display system 15 of various embodiments includes one or more of, for example, a touchscreen display, an organic light-emitting diode (OLED) display, a curved display, and/or a foldable display. The display system 15 can be for a television, a tablet, a laptop, a cell phone (mobile phone), a head mounted display or other devices. The display system 15 can also be integrated with other components (for example, as in a smart phone), or separate (for example, an external monitor for a laptop). The other peripheral devices 536 include, in various examples of embodiments, one or more of a stand-alone digital video disc (or digital versatile disc) (DVR, for both terms), a disk player, a stereo system, and/or a lighting system. Various embodiments use one or more peripheral devices 536 that provide a function based on the output of the system 13. For example, a disk player performs the function of playing an output of the system 13.

In various embodiments, control signals are communicated between the system 13 and the display system 15, speakers 535, or other peripheral devices 536 using signaling such as AV.Link, Consumer Electronics Control (CEC), or other communications protocols that enable device-to-device control with or without user intervention. The output devices can be communicatively coupled to system 13 via dedicated connections through respective interfaces 532, 533, and 534. Alternatively, the output devices can be connected to system 13 using the communications channel 12 via the communications interface 5004 or a dedicated communication channel corresponding to the communication channel 12 in Fig. 5C via the communication interface 5004. The display system 15 and speakers 535 can be integrated in a single unit with the other components of system 13 in an electronic device such as, for example, a television. In various embodiments, the display interface 532 includes a display driver, such as, for example, a timing controller (T Con) chip.

The display system 15 and speaker 535 can alternatively be separate from one or more of the other components. In various embodiments in which the display system 15 and speakers 535 are external components, the output signal can be provided via dedicated output connections, including, for example, HDMI ports, USB ports, or COMP outputs.

**Fig. 5B** illustrates a block diagram of an example of the system 11 in which various aspects and embodiments are implemented. System 11 is very similar to system 13. The system 11 can be embodied as a device including the various components described below and is configured to perform one or more of the aspects and embodiments described in this document. Examples of such devices include, but are not limited to, various electronic devices such as personal computers, laptop computers, smartphones, tablet computers, a camera and a server. Elements of system 11, singly or in combination, can be embodied in a single integrated circuit (IC), multiple ICs, and/or discrete components. For example, in at least one embodiment, the system 11 comprises one processing module 500 that implements an encoding module. In various embodiments, the system 11 is communicatively coupled to one or more other systems, or other electronic devices, via, for example, a communications bus or through dedicated input and/or output ports. In various embodiments, the system 11 is configured to implement one or more of the aspects described in this document.

The input to the processing module 500 can be provided through various input modules as indicated in block 531 already described in relation to Fig. 5C.

Various elements of system 11 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 11, the processing module 500 is interconnected to other elements of said system 11 by the bus 5005.

The communication interface 5004 of the processing module 500 allows the system 11 to communicate on the communication channel 12.

Data is streamed, or otherwise provided, to the system 11, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 11 using the RF connection of the input block 531.

As indicated above, various embodiments provide data in a non-streaming manner. Additionally, various embodiments use wireless networks other than Wi-Fi, for example a cellular network or a Bluetooth network.

The data provided to the system 11 can be provided in different format. In various embodiments these data are encoded and compliant with a known video compression format such as AV1, VP9, VVC, HEVC, AVC, ECM etc. In various embodiments, these data are raw data provided for example by a picture and/or audio acquisition module connected to the system 11 or comprised in the system 11. In that case, the processing module 500 take in charge the encoding of these data.

The system 11 can provide an output signal to various output devices capable of storing and/or decoding the output signal such as the system 13.

Various implementations involve decoding. "Decoding", as used in this application, can encompass all or part of the processes performed, for example, on a received encoded video stream in order to produce a final output suitable for display. In various embodiments, such processes include one or more of the processes typically performed by a decoder, for example, entropy decoding, inverse quantization, inverse transformation, and prediction. In various embodiments, such processes also, or alternatively, include processes performed by a decoder of various implementations described in this application, for example, for applying the DIMD mode according to an embodiment of this application.

Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded video stream. In various embodiments, such processes include one or more of the processes typically performed by an encoder, for example, partitioning, prediction, transformation, quantization, and entropy encoding. In various embodiments, such processes also, or alternatively, include processes performed by an encoder of various implementations described in this application, for example, for applying a DIMD mode according to an embodiment of this application.

Whether the phrase "encoding process" is intended to refer specifically to a subset of operations or generally to the broader encoding process will be clear based on the context of the specific descriptions and is believed to be well understood by those skilled in the art.

Note that the syntax elements names as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between a rate and a distortion is usually considered. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of a reconstructed signal after coding and decoding. Faster approaches may also be used, to save encoding complexity, in particular with computation of an approximated distortion based on a prediction or a prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a use of some coding tools. In this way, in an embodiment the same parameters can be used at both the encoder side and the decoder side.

Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can include a signal indicating a selected intra prediction mode. Such a signal can be formatted, for example, as an electromagnetic wave (for example, using a radio frequency portion of spectrum) or as a baseband signal. The formatting can include, for example, encoding an encoded video stream and modulating a carrier with the encoded video stream. The information that the signal carries can be, for example, analog or digital information. The signal can be transmitted over a variety of different wired or wireless links, as is known. The signal can be stored on a processor-readable medium.

In the following embodiments, it is proposed to provide technical solutions to improve the DIMD merge mode when intra prediction is enabled in inter-frame.

For instance, it had been observed that, theoretically, every spatially or temporally neighboring block of a current block can be used to provide HoGs. Therefore, in a first aspect, it is proposed to relax the constraint of applying DIMD merge only when the neighboring blocks of the current block are also encoded using DIMD or DIMD Merge in inter pictures.

In a second aspect, it is proposed to use a collocated block of a current block and its neighboring blocks for DIMD merge to get more exposure of temporal feature characteristics from previous picture(s) for coding efficiency improvements.

In a first embodiment, a generalization of the process of determining Merged Histograms of Gradients (MHoGs) for DIMD merge is proposed.

Existing implementations of DIMD Merge in intra pictures considers only obtaining MHoG from at least one spatial neighboring block encoded using the DIMD mode or the DIMD Merge mode. However, if intra prediction is enabled for blocks in an inter picture, the probability of having a block coded using the DIMD mode or DIMD merge mode in the neighborhood of a current block is highly reduced due to the nature of an inter picture. But, technically, nothing prevents from determining HoGs from any spatially neighboring block of the current block regardless of the coding mode of the spatially neighboring block (intra mode or inter mode). Accordingly, in this first embodiment, it is proposed to relax the restriction of using only neighboring blocks encoded using the DIMD mode or DIMD merge mode for inter pictures. Specifically, in this first embodiment, determining MHoGs from spatially neighboring blocks regardless of the coding mode used for these spatially neighboring blocks is allowed. In that case, when a neighboring block of a current block has no HoG since it was neither encoded using DIMD nor DIMD merge, a HoG is determined for this neighboring block.

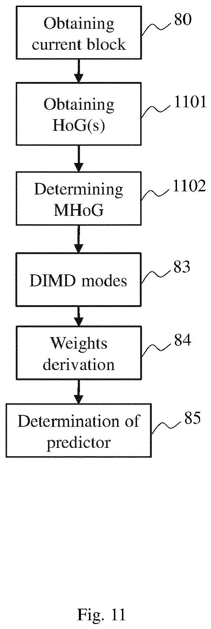

Fig. 11 illustrates an example of process compliant with the first embodiment.

The process of Fig. 11 is executed by the processing module 500 of the system 11 when the system 11 implements an encoder or by the processing module 500 of the system 13 when the system 13 implements a decoder. The encoder is for example the encoder of Fig. 3 with a modified step 303 implementing the first embodiment of Fig. 11. The decoder is for example the decoder of Fig. 4 with a modified step 415 implementing the first embodiment of Fig. 11.

The process of Fig. 11 starts with step 80 already explained in relation to Fig. 8.

In a step 1101, the processing module 500 obtains the HoG(s) from each available spatially neighboring block of the current block regardless of the mode used to encode this spatially neighboring block. Note that, in that case, a spatially neighboring block may be unavailable for example, when it is located at the left or top edge of a picture or at the edge of a slice. A difference with the regular DIMD merge mode is to compute a HoG for a neighboring block for which no HoG had been already computed since this neighboring block was not necessarily encoded using the DIMD mode or the DIMD merge mode.

In a step 1102, the processing module determines the MHoG. If a single neighboring block is available, then its HoG is used by the processing module 500 to form the MHoG for the current block. If more than one neighboring block is available, the corresponding HoGs are combined by the processing module 500 by means of bins amplitude averaging to derive the MHoG.

Step 1102 is followed by steps 83, 84 and 85 already explained in relation to Fig. 8, the MHoG being used in place of the HoG.

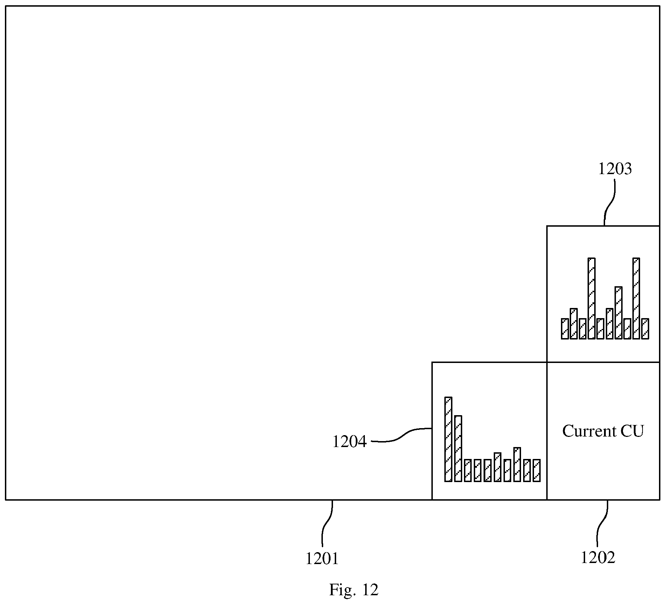

Fig. 12 illustrates schematically an example of application of the first embodiment.

In Fig. 12, an inter picture 1201 comprises an intra coded current block 1202 surrounded by a top neighboring block 1203 encoded using an inter mode and a left neighboring block 1204 encoded using an intra coding mode but neither DIMD nor DIMD merge. When the DIMD merge mode is applied to the current block, it first determines if at least one neighboring block is available. In the example of Fig. 12, the top neighboring block 1203 or the left neighboring block 1204 are available even if their coding mode is neither DIMD nor DIMD merge.

In a variant of the first embodiment, the constraint of applying the DIMD merge mode to a current block only responsive to at least one spatial neighboring block of the current block is encoded by using the DIMD mode or the DIMD Merge mode is partially kept for intra blocks in inter pictures. The process of Fig. 10 applies therefore for intra coded blocks of an inter picture. But, if during the application of the process of Fig. 10, no HoG is obtained from neighboring block (no block in the neighborhood of the current block was encoded using DIMD or DIMD merge) in step 1002, the processing module 500 applies step 1101 to obtain HoG(s) and continues with step 1102, 83, 84 and 85. In this variant, obtaining HoG(s) from neighboring blocks encoded using DIMD or DIMD merge is privileged, but, if no block was encoded using DIMD or DIMD merge in the neighborhood of the current block, neighboring blocks not encoded using DIMD or DIMD merge are used to obtain HoG(s).

In a second embodiment, it is proposed to use collocated blocks for determining MHoGs.

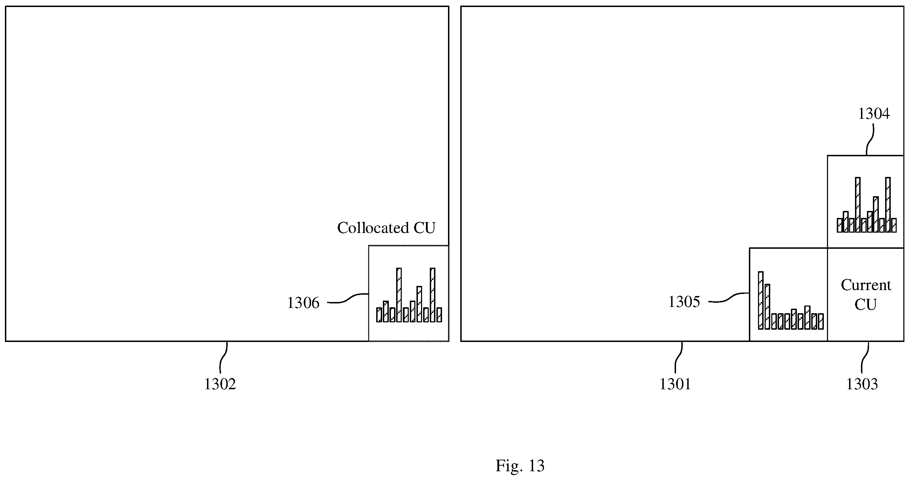

**Fig. 13** illustrates schematically a determination of MHoGs from collocated blocks.

In Fig. 13, picture 1301 is a current picture comprising a current block 1303 surrounded by a neighboring left block 1305 and a neighboring top block 1304. Picture 1302 is a reference picture of picture 1301 comprising a block 1306 collocated with block 1303. The collocated block may be coded using any mode such as an inter or an intra mode.

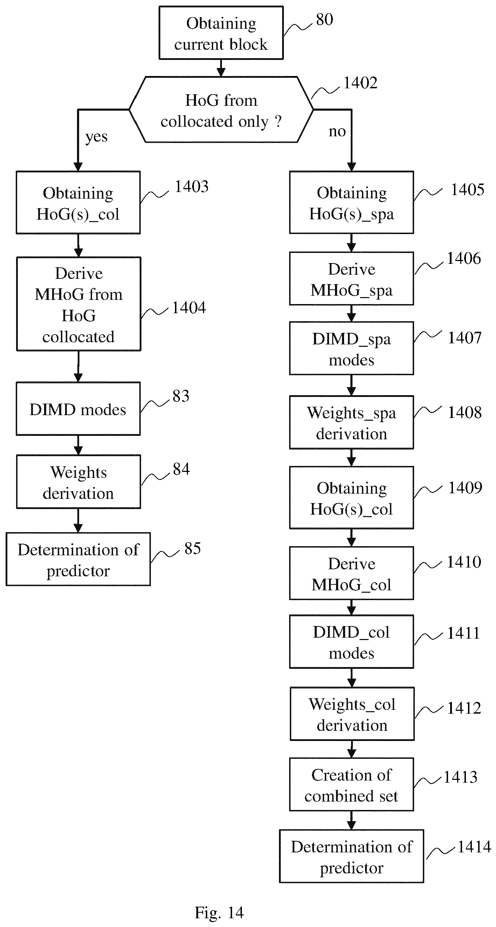

**Fig. 14** illustrates an example of process compliant with the second embodiment.

The process of Fig. 14 is executed by the processing module 500 of the system 11 when the system 11 implements an encoder or by the processing module 500 of the system 13 when the system 13 implements a decoder. The encoder is for example the encoder of Fig. 3 with a modified step 303 implementing the first embodiment of Fig. 14. The decoder is for example the decoder of Fig. 4 with a modified step 415 implementing the first embodiment of Fig. 14.

The process of Fig. 11 starts with step 80 already explained in relation to Fig. 8.

In a step 1402, the processing module 500, determines if an HoG could be obtained only from the collocated block or if HoG(s) could be obtained from the collocated block and from the block spatially neighboring the current block.

If an HoG could be obtained only from the collocated block, in a step 1403, the processing module 500 obtains the HoG(s) from the available collocated block of the current block regardless of the mode used to encode this collocated block. Note again that, in that case, a spatially neighboring block of the current block is considered unavailable for example, when it is located at the left or top edge of a picture or at the edge of a slice.

In a step 1404, the processing module 500 derives the MHoG of the current block from the HoG of the collocated block.

Step 1404 is followed by step 83 wherein the DIMD modes are derived from the MHoG and then steps 84 and 85 already explained in relation to Fig. 8.

If a HoG(s) can be derived from the collocated block and from the spatially neighboring blocks, step 1402 is followed by a step 1405. During step 1405, the processing module obtains an HoG from each available spatially neighboring block regardless of the mode used to encode this spatially neighboring block.

In a step 1406, the processing module 500 determines a first MHoG *MHoG_spa* from the HoG(s) obtained from the spatially neighboring blocks. If only one HoG was obtained from the spatially neighboring blocks, this HoG becomes the MHoG *MHoG_spa*. If a plurality of HoGs was obtained from the spatially neighboring blocks, the corresponding HoGs are combined by the processing module 500 by means of bins amplitude averaging to derive the MHoG *MHoG_spa*.

In a step 1407, the processing module 500 selects up to five directions with highest cumulative magnitude in the MHoG *MHoG_spa* to obtain DIMD modes as in step 83. The DIMD modes determined from the MHoG *MHoG_spa* are called *DIMD_spa modes* in the following.

In step 1408, the processing module 500 determines a weight for each of the selected DIMD_spa mode applying the same method than in step 84.

In a step 1409, the processing module obtains an HoG from the collocated block regardless of the mode used to encode this collocated block.

In a step 1410, the processing module 500 determines a second MHoG *MHoG_col* from the HoG obtained from the collocated block applying the same method than in a step 1403.

In a step 1411, the processing module 500 selects up to five directions with highest cumulative magnitude in the MHoG *MHoG_col* to obtain DIMD modes as in step 83. The DIMD modes determined from the MHoG *MHoG_col* are called *DIMD_col modes* in the following.

In step 1412, the processing module 500 determines a weight for each of the selected DIMD_col mode applying the same method than in step 84.

In a step 1413, the processing module 500 creates a combined set of DIMD modes from the DIMD_spa modes and the DIMD_col modes and selects the DIMD modes of the combined set corresponding to the five highest amplitudes.

In step 1414, the processing module 500 computes a weighted sum of the predictors obtained from each DIMD mode selected in step 1412 and for the planar mode using weights corresponding to the selected DIMD modes.

In a variant of the second embodiment, instead of applying steps 1405 to 1414, the processing module 500 applies a step 1405bis followed by steps 83, 84 and 85.

In step 1405bis, the processing module 500 obtains HoGs from the collocated block and from blocks neighboring the current block regardless of the mode used to encode these blocks and combines these HoG by means of bins amplitude averaging to derive a single MHoG *MHoG_spa_col.*

The MHoG *MHoG_spa_col* is then used to determine the DIMD modes in step 83 and the weight associated to each determined DIMD mode in step 84.

In a second variant of the second embodiment, several reference pictures could be used, each reference picture comprising a collocated block of the current block 1303. In that case, steps 1403 and 1409 to 1412 are repeated for each reference picture and, in step 1412, the combined set of DIMD modes comprises several sets of DIMD_col modes, one for each reference picture. Similarly, in step 1405bis, the processing module 500 combines the HoG obtained from each collocated block of each reference picture and each HoG obtained from the spatially neighboring block by means of bins amplitude averaging to derive a single MHoG *MHoG_spa_col.*

In a third embodiment, it is proposed to use collocated blocks and blocks neighboring the collocated blocks for determining MHoGs.

The third embodiment could be viewed as a variant of the second embodiment.

In this embodiment, the MHoGs may also be derived from blocks neighboring the collocated block of the current block. For example, the blocks on the top and on the left of the collocated block could be used for determining MHoGs. In a variant additional blocks neighboring the collocated block may be also used.

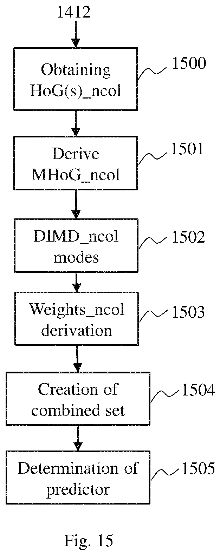

**Fig. 15** illustrates schematically a variant of the process of Fig. 14 compliant with the second embodiment.

The process of Fig. 15 is executed by the processing module 500 of the system 11 when the system 11 implements an encoder or by the processing module 500 of the system 13 when the system 13 implements a decoder. The encoder is for example the encoder of Fig. 3 with a modified step 303 implementing the first embodiment of Fig. 15. The decoder is for example the decoder of Fig. 4 with a modified step 415 implementing the first embodiment of Fig. 15.

The process of Fig. 15 consists in replacing steps 1413 and 1414 by new steps 1500 to 1505 in the process of Fig. 14. In Fig. 15, only steps 1500 to 1505 are represented. Step 1500 follows step 1412.

In a step 1500, the processing module 500 obtains the HoG *HoG_ncol* from the available block neighboring the collocated block regardless of the mode used to encode this block neighboring of the collocated block.

In step 1501, the processing module 500 determines a third MHoG *MHoG_ncol* from the HoG obtained from the blocks neighboring the collocated block. If only one HoG was obtained from the blocks neighboring the collocated block, this HoG becomes the MHoG *MHoG_ncol.* If a plurality of HoGs was obtained from the blocks neighboring the collocated block, the corresponding HoGs are combined by the processing module 500 by means of bins amplitude averaging to derive the MHoG *MHoG_ncol.*

In a step 1502, the processing module 500 selects up to five directions with highest cumulative magnitude in the MHoG *MHoG_ncol* to obtain DIMD modes as in step 83. The DIMD modes determined from the MHoG *MHoG_ncol* are called *DIMD_ncol modes* in the following.

In step 1503, the processing module 500 determines a weight for each of the selected DIMD_ncol mode applying the same method than in step 84.

In a step 1504, the processing module 500 creates a combined set of DIMD modes from the DIMD_spa modes, the DIMD_col modes and the DIMD_ncol modes and selects the DIMD modes of the combined set corresponding to the five highest amplitudes.

In step 1505, the processing module 500 computes a weighted sum of the predictors obtained from each DIMD mode selected in step 1504 and for the planar mode using weights corresponding to the selected DIMD modes.

Similarly to the first variant of the second embodiment, in a first variant of the third embodiment, instead of applying steps 1405 to 1412 and 1500 to 1505, the processing module 500 applies a step 1505ter followed by steps 83, 84 and 85.

In step 1505ter, the processing module 500 combines the HoGs obtained from the collocated block, each HoG obtained from the blocks neighboring the collocated block and each HoG obtained from the spatially neighboring block by means of bins amplitude averaging to derive a single MHoG *MHoG_spa_col_ncol.*

The MHoG *MHoG_spa_col_ncol* is then used to determine the DIMD modes in step 83 and the weight associated to each determined DIMD mode in step 84.

The second variant of the second embodiment could be applied similarly to the third embodiment.

We described above a number of embodiments. Features of these embodiments can be provided alone or in any combination. Further, embodiments can include one or more of the following features, devices, or aspects, alone or in any combination, across various claim categories and types:

- A bitstream or signal or video data that includes one or more of the described syntax elements, or variations thereof.
- Creating and/or transmitting and/or receiving and/or decoding a bitstream or signal or video data that includes one or more of the described syntax elements, or variations thereof.

- A TV, set-top box, cell phone, tablet, or other electronic device that performs at least one of the embodiments described.
- A TV, set-top box, cell phone, tablet, or other electronic device that performs at least one of the embodiments described, and that displays (e.g. using a monitor, screen, or other type of display) a resulting picture.
- A TV, set-top box, cell phone, tablet, or other electronic device that tunes (e.g. using a tuner) a channel to receive a signal including an encoded video stream, and performs at least one of the embodiments described.
- A TV, set-top box, cell phone, tablet, or other electronic device that receives (e.g. using an antenna) a signal over the air that includes an encoded video stream, and performs at least one of the embodiments described.
- A server, camera, cell phone, tablet or other electronic device that transmits (e.g. using an antenna) a signal over the air that includes an encoded video stream, and performs at least one of the embodiments described.
- A server, camera, cell phone, tablet or other electronic device that tunes (e.g. using a tuner) a channel to transmit a signal including an encoded video stream, and performs at least one of the embodiments described.

**Claims**

1. A method for encoding a current block of a current picture comprising:

   obtaining (80) the current block;
   obtaining (1101) an histogram of gradients from at least each available spatially neighboring block of the current block regardless of a mode used to encode this spatially neighboring block, each obtaining of an histogram of gradients for a spatially neighboring block comprising computing the histogram of gradients responsive to no histogram of gradients had been already computed for the spatially neighboring block;
   determining (1102) a first merged histogram of gradients from each obtained histogram of gradients resulting from the obtaining;
   selecting (83) at least one direction with highest cumulative magnitude in the first merged histogram of gradients to obtain at least one first Decoder Side Intra Mode Derivation (DIMD) modes;
   determining (84) a weight for each first DIMD mode obtained from the selecting of at least one direction, each weight depending on relative magnitudes in the first merged histogram of gradients; and,
   computing (85) a weighted sum of predictors obtained from the at least one first DIMD mode and for a planar mode using each determined weights to obtain a final predictor for the current block.

2. A method for decoding a current block of a current picture comprising:

   obtaining (80) the current block;
   obtaining (1101) an histogram of gradients from at least each available spatially neighboring block of the current block regardless of a mode used to encode this spatially neighboring block, each obtaining of an histogram of gradients for a spatially neighboring block comprising computing the histogram of gradients responsive to no histogram of gradients had been already computed for the spatially neighboring block;
   determining (1102) a first merged histogram of gradients from each obtained histogram of gradients resulting from the obtaining;
   selecting (83) at least one direction with highest cumulative magnitude in the first merged histogram of gradients to obtain at least one first Decoder Side Intra Mode Derivation (DIMD) modes;
   determining (84) a weight for each first DIMD mode obtained from the selecting of at least one direction, each weight depending on relative magnitudes in the first merged histogram of gradients; and,
   computing (85) a weighted sum of predictors obtained from the at least one first DIMD mode and for a planar mode using each determined weights to obtain a final predictor for the current block.

3. The method of claim 1 or 2 wherein, responsive to a single histogram of gradients is obtained, the determining of the first merged histogram of gradients comprises forming the first merged histogram of gradients from the single histogram of gradients and responsive to a plurality of histograms of gradients is obtained, the determining of the first merged histogram of gradients comprises combining the histograms of gradients of the plurality by means of bins amplitude averaging.

4. The method of claim 1, 2 or 3 wherein the obtaining (1101) of an histogram of gradients from at least each available spatially neighboring block of the current block regardless of the mode used to encode this spatially neighboring block comprises, obtaining at least one collocated block of the current block and obtaining an additional histogram of gradients for each collocated block, each additional histogram of gradients being used for determining the first merged histogram of gradients.

5. The method of claim 1, 2, 3 or 4 wherein the obtaining (1101) of an histogram of gradients from at least each available spatially neighboring block of the current block regardless of the mode used to encode this spatially neighboring block comprises, obtaining at least one block neighboring at least one collocated block of the current block and obtaining a complementary histogram of gradients for each neighboring block of a collocated block, each complementary histogram of gradients being used for determining the first merged histogram of gradients.

6. The method of claim 1, 2 or 3 further comprising:
obtaining at least one collocated block of the current block;
and for each collocated block:

   obtaining an histogram of gradients from the collocated block;
   determining a second merged histogram of gradients from the histogram of gradients obtained from the collocated block;
   selecting at least one direction with highest cumulative magnitude in the second merged histogram of gradients to obtain at least one second Decoder Side Intra Mode Derivation (DIMD) modes;
   determining a weight for each second DIMD mode; and
   wherein the computing of the weighted sum of predictors considers in addition each predictor obtained from a second DIMD mode and each weight associated to each second DIMD mode.

7. The method of claim 1, 2, 3 or 6 further comprising:
obtaining at least one block neighboring at least one collocated block of the current block;
and for each collocated block:

   obtaining at least one histogram of gradients from the at least one block neighboring the collocated block;
   determining a complementary merged histogram of gradients from each histogram of gradients obtained from the at least one block neighboring the collocated block;
   selecting at least one direction with highest cumulative magnitude in the complementary merged histogram of gradients to obtain at least one complementary Decoder Side Intra Mode Derivation (DIMD) modes;
   determining a weight for each complementary DIMD mode; and
   wherein the computing of the weighted sum of predictors considers in addition each predictor obtained from a complementary DIMD mode and each weight associated to each complementary DIMD mode.

8. A device for encoding a current block of a current picture comprising electronic circuitry configured for:

   obtaining (80) the current block;
   obtaining (1101) an histogram of gradients from at least each available spatially neighboring block of the current block regardless of a mode used to encode this spatially neighboring block, each obtaining of an histogram of gradients for a spatially neighboring block comprising computing the histogram of gradients responsive to no histogram of gradients had been already computed for the spatially neighboring block;
   determining (1102) a first merged histogram of gradients from each obtained histogram of gradients resulting from the obtaining;
   selecting (83) at least one direction with highest cumulative magnitude in the first merged histogram of gradients to obtain at least one first Decoder Side Intra Mode Derivation (DIMD) modes;
   determining (84) a weight for each first DIMD mode obtained from the selecting of at least one direction, each weight depending on relative magnitudes in the first merged histogram of gradients; and,

   computing (85) a weighted sum of predictors obtained from the at least one first DIMD mode and for a planar mode using each determined weights to obtain a final predictor for the current block.

9. A device for decoding a current block of a current picture comprising electronic circuitry configured for:

   obtaining (80) the current block;
   obtaining (1101) an histogram of gradients from at least each available spatially neighboring block of the current block regardless of a mode used to encode this spatially neighboring block, each obtaining of an histogram of gradients for a spatially neighboring block comprising computing the histogram of gradients responsive to no histogram of gradients had been already computed for the spatially neighboring block;
   determining (1102) a first merged histogram of gradients from each obtained histogram of gradients resulting from the obtaining;
   selecting (83) at least one direction with highest cumulative magnitude in the first merged histogram of gradients to obtain at least one first Decoder Side Intra Mode Derivation (DIMD) modes;
   determining (84) a weight for each first DIMD mode obtained from the selecting of at least one direction, each weight depending on relative magnitudes in the first merged histogram of gradients; and,

computing (85) a weighted sum of predictors obtained from the at least one first DIMD mode and for a planar mode using each determined weights to obtain a final predictor for the current block.

10. The device of claim 8 or 9 wherein, responsive to a single histogram of gradients is obtained, the determining of the first merged histogram of gradients comprises forming the first merged histogram of gradients from the single histogram of gradients and responsive to a plurality of histograms of gradients is obtained, the determining of the first merged histogram of gradients comprises combining the histograms of gradients of the plurality by means of bins amplitude averaging.

11. The device of claim 8, 9 or 10 wherein the obtaining (1101) of an histogram of gradients from at least each available spatially neighboring block of the current block regardless of the mode used to encode this spatially neighboring block comprises, obtaining at least one collocated block of the current block and obtaining an additional histogram of gradients for each collocated block, each additional histogram of gradients being used for determining the first merged histogram of gradients.

12. The device of claim 8, 9, 10 or 11 wherein the obtaining (1101) of an histogram of gradients from at least each available spatially neighboring block of the current block regardless of the mode used to encode this spatially neighboring block comprises, obtaining at least one block neighboring at least one collocated block of the current block and obtaining a complementary histogram of gradients for each neighboring block of a collocated block, each complementary histogram of gradients being used for determining the first merged histogram of gradients.

13. The device of claim 8, 9 or 10 wherein the electronic circuitry is further configured for:
obtaining a collocated block of the current block;
and for each collocated block:

obtaining an histogram of gradients from the collocated block;
determining a second merged histogram of gradients from the histogram of gradients obtained from the collocated block;
selecting at least one direction with highest cumulative magnitude in the second merged histogram of gradients to obtain at least one second Decoder Side Intra Mode Derivation (DIMD) modes;
determining a weight for each second DIMD mode; and
wherein the computing of the weighted sum of predictors considers in addition each predictor obtained from a second DIMD mode and each weight associated to each second DIMD mode.

14. The device of claim 8, 9, 10 or 13 wherein the electronic circuitry is further configured for:
obtaining at least one block neighboring at least one collocated block of the current block;
and for each collocated block:

obtaining at least one histogram of gradients from the at least one block neighboring the collocated block;
determining a complementary merged histogram of gradients from each histogram of gradients obtained from the at least one block neighboring the collocated block;
selecting at least one direction with highest cumulative magnitude in the complementary merged histogram of gradients to obtain at least one complementary Decoder Side Intra Mode Derivation (DIMD) modes;
determining a weight for each complementary DIMD mode; and
wherein the computing of the weighted sum of predictors considers in addition each predictor obtained from a complementary DIMD mode and each weight associated to each complementary DIMD mode.

15. Non-transitory information storage medium storing program code instructions for implementing the method according to any previous claim from claim 1 to 7.

16. A computer program comprising program code instructions for implementing the method according to any previous claim from claim 1 to 7.

17. A signal generated by the method for encoding according to claim 1 or any claim from claim 3 to 7 or by the device for encoding according to claim 8 or any claim from claim 10 to 14.

Fig. 1

Fig. 2

Fig. 3

311

Encoded video
stream

410

Entropic decoding

412

Inverse quant.

413

Inverse transf.

414

Mode?

408

MV decoding

DPB

419

motion
compensation

416

Intra
prediction

415

Saving of ref.
picture

418

In-loop Filtering

417

Decoded pictures

Post-processing

421

Post-
processed
pictures

Fig. 4

Fig. 5A

Fig. 5B

15        535        536

| Display | Speakers | Peripherals |

| RF, COMP, USB, HDMI | Display Interface | Audio Interface | Peripheral Interface |

531        532        533        534

5005

500

13

Communication channel

12

Fig. 5C

Fig. 6

Fig. 7

Obtaining
current block — 80

Obtaining neighboring
reconstructed reference
samples — 81

HoG
derivation — 82

DIMD modes — 83

Weights
derivation — 84

Determination of
predictor — 85

Fig. 8

Fig. 9

Fig. 10

Obtaining
current block — 80

↓

Obtaining
HoG(s) — 1101

↓

Determining
MHoG — 1102

↓

DIMD modes — 83

↓

Weights
derivation — 84

↓

Determination of
predictor — 85

Fig. 11

EP 4 614 968 A1

Fig. 12

Fig. 13

EP 4 614 968 A1

Obtaining
current block — 80

HoG from
collocated only ? — 1402

yes      no

Obtaining
HoG(s)_col — 1403

Derive
MHoG from
HoG
collocated — 1404

DIMD modes — 83

Weights
derivation — 84

Determination of
predictor — 85

Obtaining
HoG(s)_spa — 1405

Derive
MHoG_spa — 1406

DIMD_spa
modes — 1407

Weights_spa
derivation — 1408

Obtaining
HoG(s)_col — 1409

Derive
MHoG_col — 1410

DIMD_col
modes — 1411

Weights_col
derivation — 1412

Creation of
combined set — 1413

Determination of
predictor — 1414

Fig. 14

1412

Obtaining
HoG(s)_ncol — 1500

Derive
MHoG_ncol — 1501

DIMD_ncol
modes — 1502

Weights_ncol
derivation — 1503

Creation of
combined set — 1504

Determination of
predictor — 1505

Fig. 15

# EUROPEAN SEARCH REPORT

**Application Number**

EP 24 30 5351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BLASI (NOKIA) S ET AL: "AHG12: Intra-prediction using Merged Histogram of Gradients", 145. MPEG MEETING; 20240122 - 20240126; ONLINE; (MOTION PICTURE EXPERT GROUP OR ISO/IEC JTC1/SC29/WG11), , no. m65970 17 January 2024 (2024-01-17), XP030315011, Retrieved from the Internet: URL:https://dms.mpeg.expert/doc_end_user/documents/145_Teleconference/wg11/m65970-JVET-AG0078-v3-JVET-AG0078-v3.zip JVET-AG0078-v3.docx [retrieved on 2024-01-17] | 1-5, 8-12, 15-17 | INV. H04N19/105 H04N19/11 H04N19/136 H04N19/176 H04N19/593 |
| A | * the whole document * | 6,7,13, 14 | |
| Y | WO 2023/193806 A1 (MEDIATEK INC [CN]) 12 October 2023 (2023-10-12) | 1-5, 8-12, 15-17 | |
| A | * page 17 * | 6,7,13, 14 | **TECHNICAL FIELDS SEARCHED (IPC)** H04N |
| Y | US 2019/166370 A1 (XIU XIAOYU [US] ET AL) 30 May 2019 (2019-05-30) * paragraph [0122] * | 4,11 | |

The present search report has been drawn up for all claims

| Place of search | Date of completion of the search | Examiner |
|---|---|---|
| Munich | 10 July 2024 | Regidor Arenales, R |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 24 30 5351

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2024

| Patent document cited in search report | Publication date | Patent family member(s) | | Publication date |
|---|---|---|---|---|
| WO 2023193806 A1 | 12-10-2023 | TW | 202349956 A | 16-12-2023 |
|  |  | WO | 2023193806 A1 | 12-10-2023 |
| US 2019166370 A1 | 30-05-2019 | EP | 3453174 A1 | 13-03-2019 |
|  |  | US | 2019166370 A1 | 30-05-2019 |
|  |  | US | 2023319289 A1 | 05-10-2023 |
|  |  | WO | 2017192995 A1 | 09-11-2017 |

EPO FORM P0459

For more details about this annex : see Official Journal of the European Patent Office, No. 12/82

**EP 4 614 968 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Algorithm description of Enhanced Compression Model 11 (ECM 11). *Joint Video Experts Team (JVET) of ITU-T SG 16 WP 3 and ISO/IEC JTC 11SC 29, 32nd Meeting,*, 13 October 2023

- **J. HUO** ; **J. FAN** ; **Z. ZHANG** ; **Y. MA** ; **F. YANG** ; **M. LI**. EE2-related: Non-adjacent spatial candidates for DIMD merge. *JVET-AF0106*, October 2023
- **M. BLESTEL** ; **P. ANDRIVON**. AHG12: DIMD Merge List. *JVET-AG0084*, January 2024